# FASCICULE DE BREVET EUROPEEN

(11) **EP 2 125 259 B1**
(45) Date de publication et mention de la délivrance du brevet: **27.10.2010**
(21) Numéro de dépôt: 08799826.6
(22) Date de dépôt: 18.03.2008
(51) Int. Cl.: B21C 23/22, B21K 25/00, B21D 53/92, G02B 6/38, B21B 1/00

(54) **PRODUIT CORROYÉ INCLUANT UN CAPTEUR OPTIQUE ET SON PROCÉDÉ DE FABRICATION**
BEARBEITETES PRODUKT MIT OPTISCHEM SENSOR UND HERSTELLUNGSVERFAHREN DAFÜR
DRESSED PRODUCT COMPRISING AN OPTICAL SENSOR, AND PRODUCTION METHOD THEREFOR

(30) Priorité: 23.03.2007 FR 0702141; 21.06.2007 US 945459 P
(43) Date de publication de la demande: 02.12.2009
(73) Titulaire: Alcan Rhenalu, 92400 Courbevoie (FR)
(72) Inventeur: EHRSTROM, Jean-Christophe, F-38130 Echirolles (FR); CERVI, Laurent, F-38430 Moirans (FR); EBERL, Frank, F-63500 Issoire (FR); SALVIA, Michelle, F-69130 Ecully (FR)
(74) Mandataire: Fénot, Dominique
(86) Numéro de dépôt international: PCT/FR2008/000350
(87) Numéro de publication internationale: WO 2008/129178

(56) Documents cités:
- EP-A- 0 224 598
- WO-A-2004/017117
- GB-A- 2 201 914
- US-A- 5 283 852
- US-A- 5 525 796
- US-A- 5 805 757
- US-A1- 2002 071 643

## Description

### Domaine technique de l'invention

La présente invention concerne les produits corroyés et les éléments de structure, notamment pour construction aéronautique, en alliage d'aluminium. Les produits corroyés peuvent être des produits laminés (tels que des tôles minces, tôles moyennes, tôles épaisses), des produits filés (tels que des barres, profilés, ou tubes), et des produits forgés.

### Etat de la technique

Les structures intelligentes ont montré qu'elles pouvaient avoir un vaste éventail d'applications susceptibles d'augmenter les performances dans le domaine de l'industrie aérospatiale. Les informations récoltées par les capteurs incorporés dans la structure peuvent avoir de nombreuses applications tant liées au vol, qu'au design ou à la maintenance des appareils.

En particulier, l'inclusion de capteurs dans les éléments de structure offre non seulement des possibilités d'amélioration du suivi de la santé des structures mais peut également ouvrir de nouvelles possibilités dans le design.

Ainsi, le calcul des structures en tolérance au dommage consiste à évaluer le nombre de cycles ou de pics de sollicitation que la structure peut supporter entre le moment où un défaut est détectable et le moment où ce défaut est suffisamment grand pour être jugé comme critique. La criticité peut être jugée sur la base d'un calcul d'instabilité, avec la courbe R obtenue selon la norme ASTM E561 du matériau, ou sur la base d'un jugement tel que "la fissure ne doit pas excéder deux espaces interlisses". Le nombre de pics de sollicitations ainsi calculé, ou de vols pour une structure aéronautique, doit être inférieur ou égal à l'intervalle d'inspection prévu pour la structure, à un facteur de sécurité près.

Le défaut détectable est souvent jugé comme étant celui qu'on peut détecter visuellement. Fréquemment, dans un panneau raidi, il est constitué d'une fissure de quelques dizaines de millimètres dans la peau de part et d'autre d'un raidisseur lui-même cassé. Or cette dernière hypothèse est très pénalisante dans le calcul. En effet, la charge portée par le raidisseur, du fait qu'il est supposé cassé, est transférée sur la peau qui comporte la fissure. Le facteur d'intensité de contrainte appliqué à la fissure est donc fortement augmenté. Aussi, pour assurer l'intervalle d'inspection visé, on est conduit à augmenter l'épaisseur de peau, avec une pénalité sur le poids du panneau qui peut être évaluée à 20%.

L'adjonction d'un capteur indiquant si le raidisseur est rompu ou non apporterait donc un gain de poids de l'ordre de grandeur mentionné ci-dessus. Ce capteur peut fonctionner suivant plusieurs principes physiques : vibrations, courants, transmission de la lumière.

L'incorporation d'un capteur au sein d'un élément de structure métallique est difficile notamment en raison du risque de détérioration du capteur ou de l'élément de structure lors de la fabrication.

Il a été proposé d'apposer le capteur sur la surface de l'élément de structure.

Le brevet US 4,636,638 décrit le collage d'une fibre optique à la surface d'un élément de structure à proximité des principales sources de contraintes.

Le brevet US 5,525,796 décrit une amélioration du procédé précédent dans lequel la fibre optique, entourée d'une gaine métallique, est soudée en surface de l'élément de structure.

La demande de brevet CA 2,334,051 décrit une méthode et un système de détection de la température et de la tension mécanique en utilisant une fibre optique à réseau de Bragg déposée sur un substrat et protégée par une couche protectrice. L'apposition du capteur sur la surface de l'élément de structure pose de nombreux problèmes : le capteur est sensible à des défauts détectés uniquement en surface, et il peut subir des endommagements accidentels. L'apposition du capteur en surface nécessite par ailleurs des étapes longues et couteuses car elles doivent être réalisées au cours des étapes finales de fabrication de l'avion, notamment après les étapes de traitement de surface.

Le brevet US 5,283,852 propose d'incorporer une fibre optique dans un tube protecteur lors de la coulée du métal. Cependant la déformation du métal lors des étapes de déformation de la pièce coulée nécessaires à la fabrication de l'élément de structure risque de briser la fibre même en présence d'un tube protecteur. Par ailleurs, une fibre incorporée dans un tube protecteur n'étant pas directement en contact avec l'élément de structure n'est pas très sensible aux contraintes voire aux ruptures que celui-ci subit.

Le brevet US 6,685,365 propose de placer des fibres optiques entre deux feuilles d'aluminium et des les assembler à basse température. Ce type de méthode, destinée à la fabrication de câbles optiques, n'est pas adapté à la réalisation d'éléments de structure car les propriétés mécaniques de l'assemblage sont insuffisantes.

Le problème auquel répond la présente invention est d'incorporer un capteur en forme de fibre au sein d'un élément structural en alliage d'aluminium, sans modifier les propriétés du capteur et de l'élément structural de façon significative, de façon à pouvoir détecter l'endommagement ou la rupture de l'élément structural.

### Objet de l'invention

Un premier objet de l'invention est un procédé de fabrication d'un produit corroyé destiné à la fabrication d'un élément structural monolithique en alliage d'aluminium comprenant une étape dans laquelle on assemble par déformation à chaud au moins deux sous parties métalliques après avoir incorporé entre elles au moins un capteur en forme de fibre permettant de détecter l'endommagement ou la rupture de l'élément structural lors de son utilisation.

Un second objet de l'invention est un produit corroyé ou un élément structural monolithique en alliage d'aluminium au sein duquel est incorporé au moins un capteur en forme de fibre permettant de détecter l'endommagement ou la rupture de l'élément structural caractérisé en ce que le produit a été fabriqué par un procédé selon l'invention et que au moins 80% de la surface de la gaine et de préférence la totalité de la surface dudit capteur est en contact intime avec au moins un alliage d'aluminium dudit produit corroyé.

Un troisième objet de l'invention est un panneau de fuselage ou de voilure comprenant un élément structural selon l'invention.

### Description des figures

La figure 1 représente de manière schématique une fibre optique.
La figure 2 donne les radiographies obtenues pour les échantillons 1 (Fig. 2a), 2 (Fig. 2b), 3 (Fig. 2c) et 4 (Fig. 2d).
La figure 3 donne les radiographies obtenues pour les échantillons 5 (Fig. 3a), 7 (Fig. 3b), 8 (Fig. 3c) et 9 (Fig. 3d).
La figure 4 est une représentation simplifiée en négatif de la figure 2 pour les échantillons 1 (Fig. 4a), 2 (Fig. 4b), 3 (Fig. 4c) et 4 (Fig. 4d).
La figure 5 est une représentation simplifiée en négatif de la figure 3 pour les échantillons 5 (Fig. 5a), 7 (Fig. 5b), 8 (Fig. 5c) et 9 (Fig. 5d).

### Description détaillée de l'invention

Sauf mention contraire, les définitions de la norme européenne EN 12258-1 s'appliquent.

Le terme « tôle » est utilisé ici pour des produits laminés de toute épaisseur.

Le terme « produit corroyé » se réfère à un demi-produit prêt à être transformé, notamment par sciage, usinage et/ou mise en forme en élément de structure. Dans certains cas le produit corroyé peut être utilisé directement comme élément de structure. Les produits corroyés peuvent être des produits laminés (tels que des tôles minces, tôles moyennes, tôles épaisses), des produits filés (tels que des barres, profilés ou tubes), et des produits forgés.

Le terme « élément de structure » ou « élément structural » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

Le terme « élément de structure monolithique » se réfère à un élément de structure qui a été obtenu à partir d'une seule pièce de produit corroyé, sans assemblage, tel que rivetage, soudage, collage, avec une autre pièce.

Selon l'invention on assemble, au cours d'une étape de la fabrication d'un élément structural en alliage d'aluminium, au moins deux sous parties métalliques par déformation à chaud, après avoir incorporé entre elles au moins un capteur en forme de fibre permettant de détecter l'endommagement ou la rupture de l'élément structural lors de son utilisation.

Ainsi, contrairement à une idée communément répandue, l'incorporation d'un capteur au sein de l'élément structural lors d'une étape de déformation à chaud de la fabrication est possible sans provoquer la rupture du capteur tout en conservant des propriétés d'usage de l'élément structural satisfaisantes.

Le taux de déformation à chaud doit être suffisant pour obtenir un élément structural monolithique.

De façon à assurer un contact intime entre le capteur et l'alliage d'aluminium de l'élément structural, il est nécessaire que le capteur soit introduit entre au moins deux sous parties métalliques destinées à être assemblées par déformation à chaud pour former une seule pièce métallique. Les sous parties métalliques peuvent être entièrement disjointes avant l'étape de déformation mais elles peuvent également présenter une continuité de matière. Les sous parties métalliques peuvent être pré-assemblées avant déformation à chaud par collage, soudage, rivetage ou tout autre moyen approprié apte à faciliter leur solidarité au cours de l'assemblage par déformation à chaud. Chaque sous partie représente avantageusement un volume significatif, au moins 10% et de préférence au moins 15% du volume final. L'invention concerne de préférence des pièces obtenues à partir de plaques ou billettes en alliage d'aluminium coulées par coulée semi-continue et non à partir de pièces obtenues par métallurgie des poudres ou frittage, car ces dernières techniques ne permettent pas en général d'obtenir des éléments de structure d'une qualité suffisante pour les applications aéronautiques. Le procédé selon l'invention permet d'incorporer le capteur au coeur du produit corroyé ou de l'élément de structure. Ainsi dans un plan perpendiculaire à la direction d'un quelconque capteur sous forme de fibre, la distance minimale entre ce capteur et la surface du produit corroyé ou de l'élément de structure est avantageusement supérieure à 0,5 mm ou 1 mm et de préférence supérieure à 2 mm ou même 5 mm et de manière encore plus préférée supérieure à 10 mm. Dans un mode de réalisation préféré, la distance minimale entre un capteur et la surface du produit corroyé ou de l'élément de structure, dans un plan perpendiculaire à la direction de la fibre, est la plus élevée des distances possibles.

Le taux de déformation à chaud est avantageusement compris entre 2% et 95% et de manière préférée entre 10% et 70%. Par taux de déformation à chaud on entend le rapport entre d'une part la différence entre la somme des dimensions initiale des sous parties et la dimension finale du produit résultant de la déformation à chaud, et d'autre part la somme des dimensions initiale des sous parties, ces dimensions étant considérées dans la direction principale de déformation, à partir du moment où la fibre est en contact avec au moins une sous partie. Pour une déformation par écrasement ou par laminage le taux de déformation à chaud est égal au rapport (E₀-E_{f}) /E₀ où E_{f} est l'épaisseur finale et E₀ est la somme des épaisseurs initiales des sous parties. Pour une déformation par filage, le taux de déformation à chaud est égal au rapport (S₀- S_{f})/S₀ où S_{f} est la section finale et S₀ est la somme des sections initiales des sous parties. Le taux de déformation à chaud lors de l'étape de déformation à chaud est avantageusement supérieur à 10% et de préférence supérieure à 15% de façon à assurer la continuité de matière de la pièce obtenue. Cependant, si le taux de déformation à chaud est très élevé il est difficile de ne pas endommager le capteur. Ainsi le taux de déformation à chaud est de préférence inférieur à 70%, de manière préférée inférieur à 40% et de manière encore plus préférée inférieur à 25%.

Dans le cas du laminage, on connait par exemple l'assemblage de tôles par le procédé de placage dans lequel deux tôles sont assemblées lors d'une étape de laminage à chaud. Le forgeage à chaud permet également d'assembler deux sous parties métalliques.

Quand le capteur est introduit entre deux sous parties destinées à être assemblées par laminage ou forgeage, il est avantageux de pouvoir le rendre solidaire d'au moins une des sous parties. Dans un mode de réalisation de l'invention, le capteur est placé dans une encoche réalisée dans une des deux sous parties, de façon à être protégé d'un contact direct avec l'autre sous partie lors de la déformation. La largeur de l'encoche est de préférence du même ordre de grandeur que le diamètre du capteur de façon à ce que ce dernier soit maintenu lors de la déformation. D'une façon avantageuse, l'encoche est réalisée à l'aide d'un faisceau laser et de façon préférée le traitement laser est suivi d'un traitement de surface de type neutralisation. Dans le cas du filage, on connait, par exemple de US 4 215 560, les procédés de co-extrusion dans lesquels un fil est introduit dans la chambre d'extrusion entre deux sous parties formés par les ouvertures d'un outil. Par rapport à la billette de départ, les sous parties ont déjà été déformées quand elles viennent en contact avec le fil. Le taux de déformation à chaud considéré dans le cadre de l'invention correspond au taux de déformation des sous parties à partir du moment où elles sont en contact avec la fibre. Un compromis doit être trouvé pour l'introduction de la fibre : une introduction précoce provoque une contrainte en traction élevée sur la fibre en raison du rapport d'extrusion tandis qu'une introduction tardive réduit la distance de contact entre les matériaux ce qui peut avoir pour conséquence des défauts de contact entre la fibre et l'élément structural ainsi qu'un défaut d'assemblage des sous parties. Dans le cas du filage, on connait également, par exemple de FR 2 876 924 A1, l'extrusion de billettes composites comprenant au moins deux sous parties. La fibre peut avantageusement être introduite dans une encoche réalisée dans l'une des sous parties.

La température de déformation à chaud est un paramètre important du procédé. La température de déformation à chaud est avantageusement comprise entre 350°C et 550 °C et de manière préférée comprise entre 450°C et 500 °C. En effet, si la température est trop basse, le capteur reste trop peu ductile et sa rupture lors de la déformation est fréquente. Si la température est trop basse, on risque par ailleurs de ne pas obtenir une continuité de matière satisfaisante entre les deux sous parties métalliques. Par contre, si la température est trop élevée, les propriétés du capteur peuvent être dégradées.

Un capteur sous forme de fibre préféré est une fibre optique. Parmi tous les capteurs classiques les fibres optiques présentent de nombreux avantages. Leur fonctionnement est, en effet, insensible aux interférences électromagnétiques. Leur tenue aux environnements sévères (chimiques, nucléaires, vibrations, très hautes températures du moins si la gaine et le coeur ne sont pas en matériaux organiques) est excellente. En outre, dans le cas de l'introduction dans des structures métalliques elles ne nécessitent pas d'isolation électrique la fibre étant isolante. Elles sont, à la fois, l'élément sensible et le véhicule de l'information, ce qui leur confère un temps de réponse très court.

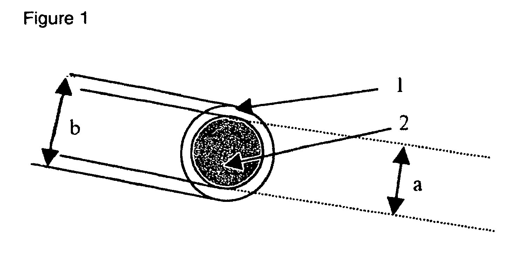

Une fibre optique conduit la lumière par réflexion entre son coeur et sa gaine. Une représentation schématique de fibre optique de diamètre b est présentée sur la Figure 1. Le coeur (2), de diamètre a et d'indice de réfraction n_{c} est entouré par une gaine (1) d'indice de réfraction n_{g}. Le coeur et la gaine se caractérisent par leur indice de réfraction différent (fibre à saut d'indice). Cependant, il existe des fibres pour lesquelles cette différence ne s'exprime pas sous la forme d'un saut d'indice mais d'un gradient.

On distingue deux grandes familles de fibres optiques : monomode et multimode. Ces deux types de fibres se caractérisent par leur géométrie, en particulier le diamètre du coeur, leurs propriétés optiques, en particulier les indices de réfraction du coeur et de la gaine, ainsi que leur condition d'utilisation en particulier la longueur d'onde de la lumière guidée le long de la fibre.

Les fibres monomodes présentent d'excellentes qualités de transmission : large bande passante et haut débit et elles sont largement utilisées dans l'industrie des télécommunications. Les fibres multimodes présentent un coeur de diamètre relativement important, c'est-à-dire supérieur à 10 µm ce qui simplifie le dispositif expérimental (connections et alignement avec la source de lumière), et une grande ouverture numérique (angle maximum que fait le rayon guidé avec l'axe de la fibre). La transmission ou l'absence de transmission de la lumière à travers la fibre optique permet de détecter la rupture de l'élément structural. Cette réponse binaire peut être obtenue avec tous les types de fibre optique. Par ailleurs, la modification des propriétés de transmission de la lumière par la fibre optique en raison de contrainte peut, avant même sa rupture, permettre de détecter un endommagement de l'élément structural mais cette réponse complexe est plus aisément obtenue avec des fibres optiques monomodes.

Malgré cette caractéristique des fibres monomodes, il est avantageux d'utiliser une fibre optique multimode car ces capteurs résistent à des températures et des déformations élevées. Ils nécessitent cependant une forte intensité lumineuse. De façon avantageuse on utilise une fibre multimode dont le diamètre total b est compris entre 30 et 500 µm et de manière préférée entre 50 et 150 µm ou 130 µm. Dans un autre mode de réalisation de l'invention, on utilise une fibre optique monomode incorporant des interféromètres (par exemple des interféromètres Fabry-Perot) ou des réseaux de Bragg). De manière préférée, on utilise une fibre multimode à coeur et gaine en silice fondue en raison de sa tenue en température et de son caractère moins local pour la mesure de déformation qu'un réseau de Bragg.

Le procédé selon l'invention ne nécessite pas toujours que le capteur soit recouvert d'un revêtement protecteur. En particulier, un revêtement protecteur métallique n'est pas toujours nécessaire pour permettre l'introduction du capteur. Dans le cas des fibres optiques, la réalisation d'un revêtement métallique est coûteuse et l'invention permet dans certains modes de réalisation de s'affranchir de cette étape. Dans une réalisation avantageuse de l'invention, au moins 80% de la surface de la gaine et de préférence la totalité de la surface de la gaine (1) de la fibre optique multimode utilisée est en contact intime avec un alliage d'aluminium du produit corroyé ou de l'élément de structure. Dans un autre mode de réalisation de l'invention, on utilise une fibre recouverte d'un revêtement protecteur tel qu'un revêtement métallique, de préférence revêtement cuivre ou un revêtement polymère, de préférence revêtement polyimide. Le revêtement protecteur permet dans certains cas de manipuler plus aisément les fibres et d'éviter la rupture de la fibre lors de la déformation à chaud.

La température de déformation préférée comprise entre 350°C et 550 °C est particulièrement avantageuse lorsque le capteur est une fibre optique et en particulier une fibre optique multimode. Des ruptures fréquentes de la fibre optique ont ainsi été observées pour des températures de déformation inférieures à 350 °C ou même inférieures à 450°C. Un endommagement de la fibre optique peut être observé quand la température dépasse 550 °C.

Il existe un compromis entre le taux de déformation à chaud et la température de déformation : une température de déformation élevée permet par exemple d'utiliser des taux de déformation à chaud plus faibles.

Dans un mode de réalisation préféré de l'invention on réalise les étapes successives suivantes :
a) coulée d'une billette en alliage 2XXX, 6XXX ou 7XXX,
b) optionnellement homogénéisation
c) co-extrusion avec une fibre optique multimode à une température comprise entre 350°C et 550 °C
d) mise en solution
e) trempe
f) traction contrôlée
g) optionnellement revenu

Le procédé selon l'invention permet la fabrication d'un produit corroyé en alliage d'aluminium destiné à la fabrication d'un élément structural monolithique en alliage d'aluminium au sein duquel est incorporé au moins un capteur en forme de fibre permettant de détecter l'endommagement ou la rupture de l'élément structural caractérisé en ce que au moins 80% de la surface de la gaine et de préférence la totalité de la surface dudit capteur est en contact intime avec au moins un alliage d'aluminium dudit produit corroyé. En effet l'incorporation du capteur au cours d'une étape de déformation à chaud permet d'assurer un contact intime en tout point.

Le procédé selon l'invention peut être utilisé pour élaborer des produits corroyés, de préférence des tôles et des profilés, et des éléments structuraux en tout alliage d'aluminium de corroyage. En particulier, l'invention peut être utilisée avec des alliages sans traitement thermique tels que les alliages 1 XXX, 3XXX, 5XXX et certains alliages de la série 8XXX, et de façon avantageuse avec des alliages 5XXX contenant du scandium, à une teneur préférée de 0,001 à 5% en poids et de façon encore plus préférée de 0,01 à 0,4% ou même 0.3% en poids.

De façon préférée, on utilise au moins un alliage d'aluminium à traitement thermique. En particulier, l'invention peut être utilisée pour élaborer des produits corroyés ou des éléments structuraux comprenant un alliage d'aluminium choisi dans le groupe constitué des alliages 2XXX, 4XXX, 6XXX, 7XXX, et 8XXX contenant du lithium.

Le produit corroyé est avantageusement une tôle. Dans une réalisation avantageuse de l'invention, l'élément de structure est obtenu par usinage intégral à partir d'une tôle selon l'invention. Dans le cas de tôles de fuselage, qui comportent fréquemment un placage, le capteur est de façon avantageuse introduit entre l'âme et le plaquage. On peut également dans une réalisation avantageuse de l'invention introduire le capteur aux positions qui deviendront après usinage intégral des raidisseurs intégrés.

D'une manière préférée, le produit corroyé est un profilé destiné à être utilisé comme raidisseur dans l'industrie aéronautique.

Les éléments structuraux selon l'invention sont particulièrement avantageux pour la réalisation de panneaux de fuselage ou de panneaux de voilure car ils permettent des gains de poids de l'ordre de 20% ; en effet, ils permettent de réaliser le calcul des structures sans avoir à faire l'hypothèse que les seuls défauts détectables sont les défauts que l'on peut détecter visuellement. Par ailleurs les capteurs étant introduits au sein des éléments structuraux, ils sont sensibles à leur rupture sans pour autant être affectés par des endommagements accidentels comme les capteurs apposés en surface. Par ailleurs, les capteurs étant entièrement entourés par l'alliage d'aluminium de l'élément structural, ils sont protégés au cours des étapes de fabrication qui suivent la déformation à chaud, telles que par exemple l'usinage ou le traitement de surface.

L'invention n'est cependant pas limitée aux éléments de structure destinés aux applications aéronautiques, les éléments de structure selon l'invention peuvent aussi trouver des applications avantageuses dans la construction aérospatiale, la construction navale, la fabrication de ponts et de bâtiments.

### Exemple

Dans cet exemple, on a réalisé une tôle au sein de laquelle a été incorporée une fibre optique. Neuf lots de deux échantillons en alliage AA6056 ont été usinés aux dimensions suivantes : 100 mm x 17 mm x 0,8 mm et 100 mm x 17 mm x 1,6 mm. Une encoche d'une largeur de 150 µm et d'une profondeur de 150 µm a été réalisée par laser dans le sens de la longueur dans l'échantillon d'épaisseur 0,8 mm. Un traitement de surface de type neutralisation a été réalisé suite au traitement laser. Une fibre optique multimode à coeur et gaine en silice fondue d'un diamètre total de 100 µm a été introduite dans chaque encoche.

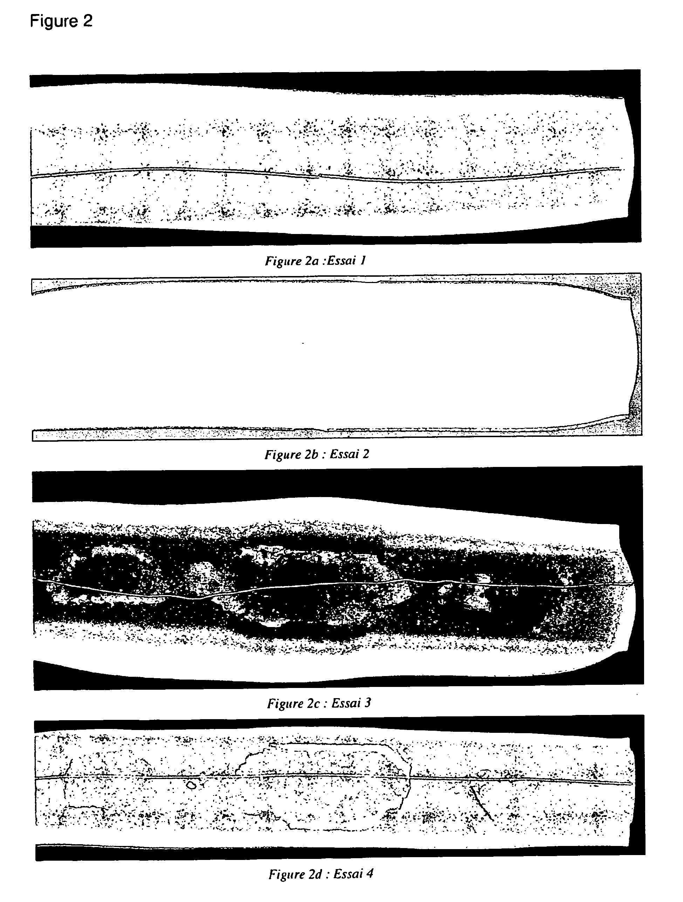

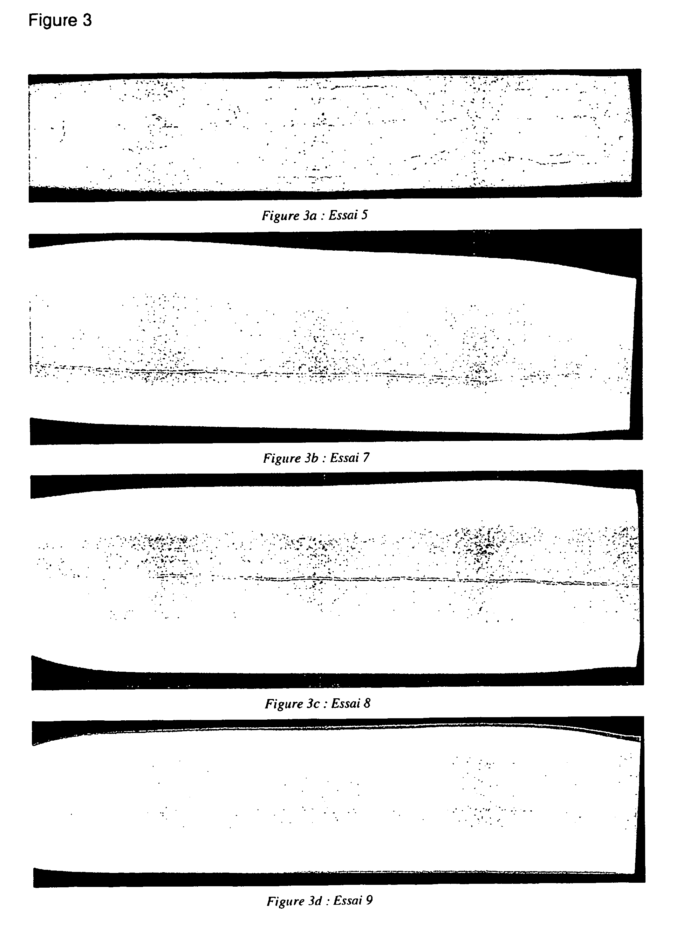

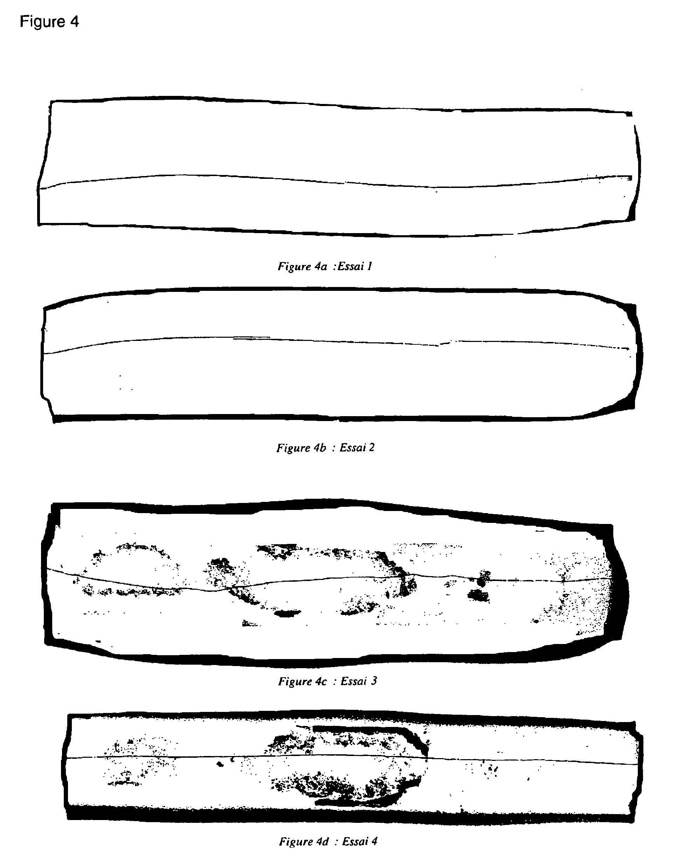

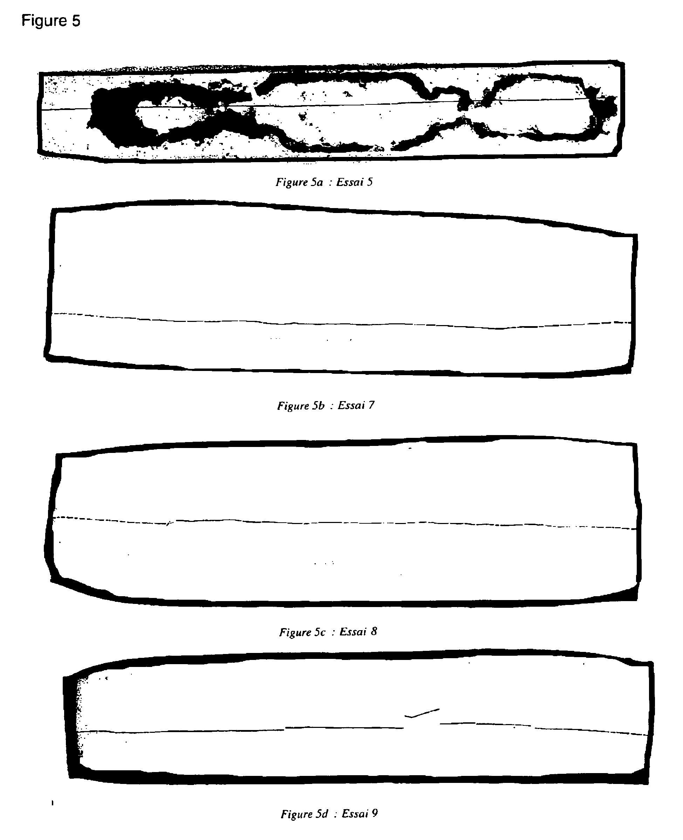

Un empilement consistant en un échantillon d'épaisseur 0,8 mm dans lequel la fibre optique a été introduite et un échantillon d'épaisseur 1,6 mm a été déformé à chaud par écrasement sur une machine de type « Servotest »®. Les essais ont été réalisés à deux températures : 400°C et 475 °C. Tous les essais ont permis d'assembler les échantillons à l'exception de l'essai n°6, pour le quel les conditions de transformation n'ont pas permis d'assembler les deux échantillons. Après déformation à chaud, les échantillons ont été radiographiés pour observer l'état de la fibre. Les radiographies obtenues pour les essais, dans lesquelles l'ensemble de l'échantillon est observé en vue de dessus, sont présentées sur les Figures 2 et 4 (essais 1 à 4) et les Figures 3 et 5 (essais 5 et 7 à 9). Dans un cas un test a été réalisé pour vérifier que la fibre transmet la lumière. L'ensemble des résultats obtenus est donné dans le tableau 1.

**Tableau 1**

| N° Essai | Ecrasement (mm) | Taux de déformation à chaud (%) | Température (°C) | Etat de la fibre (observation par radiographie) | Transmission de la lumière |
|---|---|---|---|---|---|
| 1 | 1,03 | 43% | 475 | Rompue | Non testé |
| 2 | 1 | 42% | 475 | Rompue | Non testé |
| 3 | 1,53 | 64% | 475 | Semble intacte | Non testé |
| 4 | 0,62 | 26% | 475 | Semble intacte | Non testé |
| 5 | 0,4 | 17% | 475 | Semble intacte | Oui |
| 6 | 0,44 | 18% | 400 | | |
| 7 | 1,65 | 69% | 400 | Rompue | Non testé |
| 8 | 1,65 | 69% | 400 | Rompue | Non testé |
| 9 | 1,03 | 43% | 400 | Rompue | Non testé |

La déformation à chaud à la température de 475°C permet dans la plupart des cas d'obtenir une fibre intacte. Les taux de déformation à chaud de 17% et 26% apparaissent particulièrement favorables.

## Revendications

1. Procédé de fabrication d'un produit corroyé destiné à la fabrication d'un élément structural monolithique en alliage d'aluminium comprenant une étape dans laquelle on assemble par déformation à chaud au moins deux sous parties métalliques après avoir incorporé entre elles au moins un capteur en forme de fibre permettant de détecter l'endommagement ou la rupture de l'élément structural lors de son utilisation.

2. Procédé selon la revendication 1 dans lequel le taux de déformation à chaud est compris entre 2% et 95% et de manière préférée entre 10% et 70%.

3. Procédé selon la revendication 1 ou la revendication 2 dans lequel la température est comprise entre 350°C et 550 °C lors de la dite déformation à chaud.

4. Procédé selon une quelconque des revendications 1 à 3 dans lequel ledit capteur sous forme de fibre est une fibre optique multimode.

5. Procédé selon la revendication 4 dans lequel ladite fibre a un diamètre total compris entre 30 et 500 µm.

6. Procédé selon la revendication 4 ou la revendication 5 dans lequel le coeur et la gaine de ladite fibre sont en silice fondue.

7. Produit corroyé en alliage d'aluminium, destiné à la fabrication d'un élément structural monolithique en alliage d'aluminium, au sein duquel est incorporé au moins un capteur en forme de fibre permettant de détecter l'endommagement ou la rupture de l'élément structural **caractérisé en ce que** le produit a été fabriqué par un procédé selon une quelconque des revendications 1 à 6 et que au moins 80% de la surface de la gaine et de préférence la totalité de la surface dudit capteur est en contact intime avec au moins un alliage d'aluminium dudit produit corroyé.

8. Produit corroyé selon la revendication 7 dans lequel la distance entre un quelconque capteur et la surface du produit corroyé, dans un plan perpendiculaire à la direction dudit capteur sous forme de fibre, est supérieure à 0,5 mm et de préférence supérieure à 5 mm.

9. Produit corroyé selon la revendication 7 ou la revendication 8 dans lequel ledit capteur sous forme de fibre est une fibre optique multimode.

10. Produit corroyé selon la revendication 9 dans lequel ladite fibre a un diamètre total compris entre 30 et 500 µm.

11. Produit corroyé selon la revendication 9 ou la revendication 10 dans lequel le coeur et la gaine de ladite fibre sont en silice fondue.

12. Produit corroyé selon une quelconque des revendications 9 à 11 dans lequel au moins 80% de la surface de la gaine et de préférence la totalité de la surface de la gaine (1) de la fibre optique multimode utilisée est en contact intime avec au moins un alliage d'aluminium dudit produit.

13. Produit corroyé selon une quelconque des revendications 7 à 12 comprenant un alliage d'aluminium choisi dans le groupe constitué des alliages 2XXX, 4XXX, 6XXX, 7XXX, et 8XXX contenant du lithium.

14. Produit corroyé selon une quelconque des revendications 7 à 13 le produit étant une tôle.

15. Produit corroyé selon une quelconque des revendications 7 à 13 le produit étant un profilé.

16. Elément de structure obtenu à partir d'un produit corroyé selon une quelconque des revendications 7 à 15.

17. Panneau de fuselage comprenant un élément de structure selon la revendication 16.

18. Panneau de voilure comprenant un élément de structure selon la revendication 16.

## Claims

1. Method for manufacturing a worked product intended for manufacturing a monolithic structural element made of an aluminium alloy, including a step in which at least two metal subparts are assembled via hot deformation, after having incorporated between them at least one sensor in the form of a fibre, enabling detection of damage to or fracturing of the structural element during the use thereof.

2. Method of claim 1, in which the deformation ratio is between 2% and 95% and preferably between 10% and 70%.

3. Method as claimed in claim 1 or claim 2, in which the temperature is between 350°C and 550°C during said hot deformation.

4. Method as claimed in any of claims 1 to 3, in which said sensor in the form of a fibre is a multimode optical fibre.

5. Method of claim 4, in which said fibre has a total diameter of between 30 and 500 µm.

6. Method as claimed in claim 4 or claim 5, in which the core and the sheath of said fibre are made of silica glass.

7. Wrought product made of an aluminium alloy, intended for the manufacture of a monolithic structural element made of an aluminium alloy, within which is incorporated at least one sensor in the form of a fibre, enabling detection of damage to or fracturing of the structural element, **characterised in that** it has been obtained by a process according anyone of claims 1 to 6 and **in that** at least 80% and preferably the entire surface of the sheath is in close contact with at least one aluminium alloy of said wrought product.

8. Wrought product of claim 7, in which the distance between any sensor and the surface of the wrought product, in a plane perpendicular to the direction of said sensor in the form of a fibre, is greater than 0.5 mm, and preferably greater than 5 mm.

9. Wrought as claimed in claim 7 or claim 8, in which said sensor in the form of a fibre is a multimode optical fibre.

10. Wrought product of claim 9, in which said fibre has a total diameter of between 30 and 500 µm.

11. Wrought product as claimed in claim 9 or claim 10, in which the core and the sheath of said fibre are made of silica glass.

12. Wrought product as claimed in any of claims 9 to 11, in which at least 80 % and preferably the entire surface of the sheath (1) of the multimode optical fibre used is in close contact with at least one aluminium alloy of said product.

13. Wrought product as claimed in any of claims 7 to 12, including an aluminium alloy chosen from the group consisting of the 2XXX, 4XXX, 6XXX, 7XXX and 8XXX alloys containing lithium.

14. Wrought product as claimed in any of claims 7 to 13, the product being a plate.

15. Wrought product as claimed in any of claims 7 to 13, the product being an extruded profile.

16. Structural member obtained from a wrought product as claimed in any of claims 7 to 15.

17. Fuselage skin panel including a structural member of claim 16.

18. Wing panel including a structural member of claim 16.

## Patentansprüche

1. Verfahren zum Herstellen eines Kneterzeugnisses für die Herstellung eines monolithischen Strukturelements aus Aluminiumlegierung, umfassend einen Schritt, bei dem mindestens zwei metallische Teilbereiche durch Warmumformung zusammengefügt werden, nachdem zwischen den Teilbereichen mindestens ein Sensor in Gestalt einer Faser zur Erfassung der Beschädigung oder des Bruchs des Strukturelements bei seinem Einsatz eingebaut wurde.

2. Verfahren nach Anspruch 1, bei dem der Warmumformgrad im Bereich zwischen 2 % und 95 % und vorzugsweise zwischen 10 % und 70 % liegt.

3. Verfahren nach Anspruch 1 oder Anspruch 2, bei dem die Temperatur bei der Warmumformung im Bereich zwischen 350 °C und 550 °C liegt.

4. Verfahren nach irgendeinem der Ansprüche 1 bis 3, bei dem der als Faser ausgestaltete Sensor ein Mehrmoden-Lichtwellenleiter ist.

5. Verfahren nach Anspruch 4, bei dem die Faser einen Gesamtdurchmesser zwischen 30 und 500 µm hat.

6. Verfahren nach Anspruch 4 oder Anspruch 5, bei dem der Kern und der Mantel der Faser aus Quarzgut bestehen.

7. Kneterzeugnis aus Aluminiumlegierung für die Herstellung eines monolithischen Strukturelements aus Aluminiumlegierung, in welchem mindestens ein Sensor in Gestalt einer Faser zur Erfassung der Beschädigung oder des Bruchs des Strukturelements eingebaut ist, **dadurch gekennzeichnet, dass** das Erzeugnis durch ein Verfahren nach irgendeinem der Ansprüche 1 bis 6 hergestellt wurde und mindestens 80
% der Oberfläche des Mantels und vorzugsweise die gesamte Oberfläche des Sensors in innigem Kontakt mit mindestens einer Aluminiumlegierung des Kneterzeugnisses steht.

8. Kneterzeugnis nach Anspruch 7, bei dem der Abstand zwischen einem beliebigen Sensor und der Oberfläche des Kneterzeugnisses in einer Ebene quer zur Richtung des als Faser ausgestalteten Sensors größer als 0,5 mm und vorzugsweise größer als 5 mm ist.

9. Kneterzeugnis nach Anspruch 7 oder Anspruch 8, bei dem der als Faser ausgestaltete Sensor ein Mehrmoden-Lichtwellenleiter ist.

10. Kneterzeugnis nach Anspruch 9, bei dem die Faser einen Gesamtdurchmesser zwischen 30 und 500 µm hat.

11. Kneterzeugnis nach Anspruch 9 oder Anspruch 10, bei dem der Kern und der Mantel der Faser aus Quarzgut bestehen.

12. Kneterzeugnis nach irgendeinem der Ansprüche 9 bis 11, bei dem mindestens 80 % der Oberfläche des Mantels und vorzugsweise die gesamte Oberfläche des Mantels (1) des eingesetzten Mehrmoden-Lichtwellenleiters in innigem Kontakt mit mindestens einer Aluminiumlegierung des Erzeugnisses steht.

13. Kneterzeugnis nach irgendeinem der Ansprüche 7 bis 12, umfassend eine Aluminiumlegierung, die ausgewählt ist aus der Gruppe bestehend aus den Lithium enthaltenden Legierungen 2xxx, 4xxx, 6xxx, 7xxx und 8xxx.

14. Kneterzeugnis nach irgendeinem der Ansprüche 7 bis 13, wobei das Erzeugnis ein Blech ist.

15. Kneterzeugnis nach irgendeinem der Ansprüche 7 bis 13, wobei das Erzeugnis ein Profil ist.

16. Strukturelement, gewonnen aus einem Kneterzeugnis nach irgendeinem der Ansprüche 7 bis 15.

17. Rumpfplatte, umfassend ein Strukturelement nach Anspruch 16.

18. Tragflügelplatte, umfassend ein Strukturelement nach Anspruch 16.
